(19) Europäisches Patentamt
European Patent Office
Office européen des brevets

(11) **EP 1 333 516 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(51) Int Cl.:
***H01M 8/02*** *(2006.01)*

(21) Anmeldenummer: **03000975.7**

(22) Anmeldetag: **17.01.2003**

(54) **Verfahren zur Verbesserung eines Wärme- und Stofftransports in einer Diffusionsschicht einer Brennstoffzelle und entsprechende Brennstoffzelle**

Fuel cell and process for improving the transport of heat and matter in a diffusion layer of a fuel cell

Pile à combustible et procédé d'amelioration du transport de chaleur et de matière dans le film de diffusion d'une pile à combustible

(84) Benannte Vertragsstaaten:
**AT BE BG CH CY CZ DE DK EE ES FI FR GB GR HU IE IT LI LU MC NL PT SE SI SK TR**

(30) Priorität: **05.02.2002 DE 10204598**

(43) Veröffentlichungstag der Anmeldung:
**06.08.2003 Patentblatt 2003/32**

(73) Patentinhaber: **Volkswagen Aktiengesellschaft 38436 Wolfsburg (DE)**

(72) Erfinder:
• **Wilkening, Heinz**
  **38550 Isenbüttel (DE)**
• **Huslage, Jörg, Dr.**
  **31303 Burgdorf (DE)**
• **Heser, Frank**
  **38550 Isenbüttel (DE)**

(74) Vertreter: **Reinstädler, Diane Anwaltskanzlei Gulde Hengelhaupt Ziebig & Schneider Wallstrasse 58/59 10179 Berlin (DE)**

(56) Entgegenhaltungen:
EP-A2- 1 109 241     WO-A1-00/17952
WO-A2-01/13441     WO-A2-02/056402
DE-A1- 10 008 022

EP 1 333 516 B1

**Beschreibung**

Die Erfindung betrifft ein Verfahren zur Verbesserung eines Wärme- und Stofftransports in einer Diffusionsschicht einer Brennstoffzelle, wobei die Diffusionsschicht mit einem eine Mehrzahl an Betriebsmittelführungskanälen aufweisenden Bipolarelement in Verbindung steht, gemäß Oberbegriff des Anspruchs 1. Ferner bezieht sich die Erfindung auf ein Bipolarelement sowie eine Brennstoffzelle entsprechend den Oberbegriffen der Ansprüche 10 beziehungsweise 12.

Verfahren und Brennstoffzellen der eingangs genannten Art sind bekannt. Dabei beruht das Wirkprinzip einer Brennstoffzelle darauf, dass in einer elektrochemischen Reaktion Edukte (zumeist Wasserstoff und Sauerstoff) zu Produkten (Wasser) reagieren. Durch die elektrochemische Reaktion entsteht gegebenenfalls eine Potentialdifferenz und ein elektrischer Strom, so dass mittels der Brennstoffzelle direkt elektrische Energie erzeugt werden kann.

Eine Brennstoffzelle enthält zwei voneinander beabstandete katalytische Reaktionsschichten unter Zwischenanordnung einer Membran. Dabei findet in einer Reaktionsschicht eine Anodenreaktion und in der anderen Reaktionsschicht eine Kathodenreaktion statt. Die Membran gewährleistet einen erwünschten Transport von Ladungsträgern, zum Beispiel von Protonen ($H^+$). Beide katalytischen Reaktionsschichten sind mit je einer porösen Diffusionsschicht derart wirkverbunden, dass Edukte (zum Beispiel $H_2$ bzw. $O_2$) und Produkte (zum Beispiel $H_2O$) der elektrochemischen Reaktion sowie Elektronen $e^-$ der entsprechenden katalytischen Reaktionsschicht zu-/ bzw. abgeführt werden. Dabei erfolgt in der porösen Diffusionsschicht ein Gastransport durch deren Poren, während gleichzeitig Elektronen durch die elektrisch leitende Struktur derselben Diffusionsschicht transportiert werden. Die poröse Diffusionsschicht steht mit einer Bipolarplatte (Bipolarelement) in Verbindung, welche an ihrer Kontaktseite mit randoffenen Betriebsmittelführungskanälen (Strömungskanäle) und entsprechend zwischenangeordneten Stegen versehen ist.

Die Strömungskanäle in der Bipolarplatte dienen zum Transport, das heißt zum Abbeziehungsweise Zuführen von gasförmigen Edukten (Betriebsmittel) und Reaktionsprodukten, während mittels der Stege in entsprechender Weise Elektronen zu- beziehungsweise abgeführt werden. Dabei stellt sich in bekannten Brennstoffzellen ein vorrangig diffuser Wärme- und Stofftransport in der Diffusionsschicht ein. Der obere Leistungsbereich einer Brennstoffzelle (große Stromdichte) ist durch den Stofftransport durch die Diffusionsschicht von Edukten/Produkten zur/von der katalytischen Reaktionsschicht (Elektrode) und durch den Abwärmetransport von der Reaktionsschicht durch die Diffusionsschicht begrenzt. Grundsätzlich anzustreben ist ein möglichst gleichmäßiger Wärme- und Stofftransport zwischen der porösen Diffusionsschicht und der angrenzenden katalytischen Reaktionsschicht, um eine entsprechend gleichmäßige Reaktions- beziehungsweise Stromdichte in derselben katalytischen Reaktionsschicht zu erreichen. Ein zu diesem Zweck hinreichend gleichmäßiger Wärme- und Stofftransport von der porösen Diffusionsschicht zur katalytischen Reaktionsschicht kann in bekannten Brennstoffzellen nicht immer gewährleistet werden.

Aus WO 00/17952 A1 ist eine Bipolarplatte bekannt, die ein Kanalsystem zur Zu- und Abführung eines Betriebsmittels mit einer Mehrzahl von Betriebsmittelführungskanälen aufweist. Dabei kommuniziert eine erste, der Zuführung dienende Kanalgruppe mit einem Betriebsmitteleinlass und endet auf einer Fläche der Bipolarplatte, während eine zweite, der Abführung dienende Kanalgruppe ebenfalls auf der Fläche der Bipolarplatte entspringt und mit einem Betriebsmittelauslass in Verbindung steht.

DE 100 08 022 A1 beschreibt eine Bipolarplatte mit einer Vielzahl von Betriebsmittelführungskanälen, die sich von einem Betriebsmitteleintritt bis zum Betriebsmittelaustritt kontinuierlich erstrecken. Zwei der Kanäle bilden in einem Zentralbereich der Bipolarplatte zueinander benachbart verlaufende Kanalabschnitte aus, wobei einer dieser Kanäle stromauf des Zentralbereichs eine zusätzlich Schleife durchläuft und der andere Kanal stromab des Zentralbereichs eine zusätzlich Schleife durchläuft.

Es ist Aufgabe der Erfindung, ein Verfahren, ein Bipolarelement und eine Brennstoffzelle der eingangs genannten Art vorzuschlagen, die einen verbesserten Wärme- und Stofftransport in einer Diffusionsschicht einer Brennstoffzelle ermöglichen.

Zur Lösung der Aufgabe wird ein Verfahren mit den Merkmalen des Anspruchs 1 vorgeschlagen, das sich dadurch auszeichnet, dass in mindestens zwei benachbarten Betriebsmittelführungskanälen eine Druckdifferenz erzeugt wird unter Ausbildung eines konvektiven Wärme- und Stofftransports, wobei zueinander benachbart verlaufende Kanalabschnitte die Form eines Einfach- oder Mehrfachmäanders oder einer Doppelspirale ausbilden. Hierbei ist zu unterscheiden zwischen einem diffusiven und einem konvektiven Wärme- und Stofftransport. Ein diffusiver Transport stellt sich aufgrund eines vorliegenden Konzentrations- bzw. Temperaturgradienten ein, während ein konvektiver Transport auf einen vorliegenden Druckgradienten zurückzuführen ist. Somit ergibt sich bei dem erfindungsgemäßen Verfahren sowohl ein diffusiver Wärme- und Stofftransport als auch ein entsprechender konvektiver Transport, da zwischen mindestens zwei benachbarten Betriebsmittelführungskanälen ein hinreichend großer Druckgradient (Druckdifferenz) vorliegt. Ein reiner diffusiver Wärme- und Stofftransport wie im Stand der Technik würde zu einer ungleichmäßigen Reaktion- beziehungsweise Stromdichte in der katalytischen Reaktionsschicht der Brennstoffzelle führen aufgrund eines entsprechend ungleichmäßigen Wärme- und Stofftransports in derselben katalytischen Reaktionsschicht. Mittels des zusätzlich sich einstellenden konvektiven Wärme- und Stofftransports kann eine im Bereich zum Stand der Technik gleichmäßigere Reaktions- beziehungsweise Stromdichte in der katalytischen Reaktionsschicht erreicht werden. Dabei können in diesem Zusammenhang unter "benachbarte Betriebsmittelführungskanälen" auch entsprechende Kanalabschnitte verstanden werden.

Mit Vorteil weist das Betriebsmittel gasförmige Reaktionsprodukte und gasförmige Reaktionsedukte auf. Dabei können die Reaktionsprodukte Wasser ($H_2O$) und die Reaktionsedukte Wasserstoff und Sauerstoff ($H_2$, $O_2$) sein, welche jeweils im gasförmigen Zustand durch die Betriebsmittelführungskanäle geführt werden.

Vorzugsweise sind die in der Diffusionsschicht zu transportierenden Stoffe Reaktionsedukte, insbesondere $H_2$ und $O_2$, Reaktionsprodukte, insbesondere $H_2O$, und Elektronen. Der Einsatz dieser Stoffe in einer Brennstoffzelle ist bereits bekannt. Sie werden von der Diffusionsschicht zu einer katalytischen Reaktionsschicht der Brennstoffzelle transportiert.

Vorzugsweise ist das Bipolarelement als eine oberflächenstrukturierte Bipolarplatte ausgebildet mit an einer Oberfläche randoffenen Betriebsmittelführungskanälen und zwischenangeordneten Stegen. Dabei dienen die Betriebsmittelführungskanäle dazu, die gasförmigen Reaktionsedukte und Reaktionsprodukte zu- beziehungsweise abzuführen, während mittels der Stege Elektronen entsprechend zu- beziehungsweise abgeführt werden. Dabei gelangen gasförmige Reaktionsprodukte und Reaktionsedukte sowie Elektronen in die Diffusionsschicht.

Entsprechend einer bevorzugten Ausführungsvariante erfolgt die Erzeugung der Druckdifferenz in jeweils zwei benachbarten Betriebsmittelführungskanälen bei gleichzeitiger Druckabfallminimierung zwischen einem Betriebsmitteleintritt und einem Betriebsmittelaustritt der Brennstoffzelle. Ein hoher Druckabfall in der Brennstoffzelle ist dabei zu vermeiden, da er mit entsprechend großen Verlustleistungen beispielsweise bei Verdichtern (niedrigerer Gesamtwirkungsgrad) verbunden ist. Somit ist eine Druckdifferenz zwischen zwei benachbarten Betriebsmittelführungskanälen besonders erwünscht, jedoch bei gleichzeitig geringem Druckabfall in Bezug auf die Brennstoffzelle als Ganzes.

Erfindungsgemäß wird die Druckdifferenz in sich kontinuierlich vom Betriebsmitteleintritt bis zum Betriebsmittelaustritt der Brennstoffzelle erstreckenden, benachbarten Betriebsmittelführungskanälen erzeugt. Mittels der kontinuierlichen, das heißt unterbrechungsfreien Betriebsmittelführungskanäle wird eine effektive Druckabfallminimierung der Brennstoffzelle bei gleichzeitiger Erzeugung einer erwünschten Druckdifferenz in jeweils zwei benachbarten Betriebsmittelführungskanälen ermöglicht.

Ferner erstreckt sich das erfindungsgemäße, die Betriebsmittelführungskanäle aufweisende Kanalsystem vom Betriebsmitteleintritt bis zum Betriebsmittelaustritt der Brennstoffzelle im wesentlichen in Form eines Einfachmäanders, eines Mehrfachmäanders, einer Doppelspirale oder eines anderen, benachbarte Kanalabschnitte hervorrufenden Flussfeldes. Somit sind eine Vielzahl an Möglichkeiten in Bezug auf die Verläufe der Betriebsmittelführungskanäle im Bipolarelement möglich, um einen erwünschten Druckgradienten zwischen zwei benachbarten Betriebsmittelführungskanälen herzustellen.

Gemäß einer bevorzugten Ausführungsvariante weist das Kanalsystem zwei oder mehr Betriebsmittelführungskanäle auf, wobei jeweils einer der beiden Betriebsmittelführungskanäle stromabwärts zum Betriebsmitteleintritt eine zusätzliche Schleife ausführt, sich anschließend in Durchströmungsrichtung im wesentlichen parallel und insbesondere unter Ausbildung eines Einfach- oder Mehrfachmäanders zum anderen Betriebsmittelführungskanal bis zum Betriebsmittelaustritt erstreckt, wobei die anderen Betriebsmittelführungskanäle stromaufwärts bis zum Betriebsmittelaustritt eine zusätzliche Schleife ausführt, und wobei die zwei Schleifen insbesondere gleich lang sind und eine einander entsprechende Formgestaltung aufweisen. Mittels der zusätzlichen Schleifen wird die erwünschte Druckdifferenz zwischen zwei benachbarten Betriebsmittelführungskanälen erzielt, indem die vom Betriebsmitteleintritt zurückzulegende Kanalstrecke bis zu einem bestimmten Punkt zweier benachbarter Betriebsmittelführungskanäle unterschiedlich groß ist aufgrund der zu durchströmenden ersten Schleife eines der beiden Betriebsmittelführungskanäle, wobei diese Druckdifferenz vor Erreichen des Betriebsmittelaustritts abgebaut wird, indem der andere Betriebsmittelführungskanal am Durchströmungsende die zweite Schleife aufweist.

Zur Lösung der Aufgabe wird ferner ein Bipolarelement sowie eine diese enthaltene Brennstoffzelle mit den Merkmalen der Ansprüche 10 beziehungsweise 12 vorgeschlagen. Mittels einer derartigen Brennstoffzelle lassen sich die in Bezug auf das Verfahren vorerwähnten Vorteile erzielen.

Die Brennstoffzelle kann Teil eines Brennstoffzellensystems mit stationärer oder mobiler (insbesondere in einem Kraftfahrzeug) Anwendung sein.

Weitere vorteilhafte Ausgestaltungen der Erfindung ergeben sich aus der Beschreibung.

Die Erfindung wird nachfolgend in einem Ausführungsbeispiel anhand zugehöriger Zeichnungen näher erläutert. Es zeigen:

Figur 1     eine schematische Querschnittdarstellung eines Teils einer Brennstoffzelle;

Figur 2     eine schematische Draufsicht auf ein Kanalsystem einer Bipolarplatte einer erfindungsgemäßen Brennstoffzelle;

Figur 3     ein Balkendiagramm mit normierten Druckwerten in den jeweiligen Kanälen einer Bipolarplatte entlang einer Schnittlinie;

Figur 4 ein Balkendiagramm zur Darstellung der maximalen normierten Druckdifferenz zu einem jeweiligen Nachbarkanal und

Figur 5 ein Balkendiagramm zur Darstellung der minimalen normierten Druckdifferenz zu einem jeweiligen Nachbarkanal.

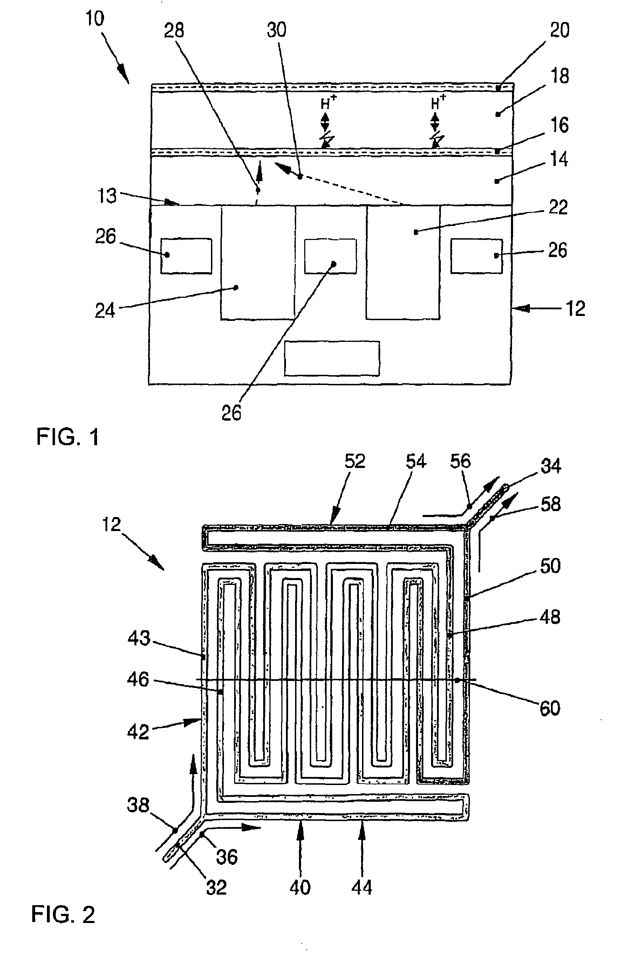

Figur 1 zeigt in schematischer Darstellung einen Teil einer allgemein mit 10 bezeichneten Brennstoffzelle, welche beispielsweise in einem Kraftfahrzeug eingesetzt werden kann. Die Brennstoffzelle 10 enthält eine nur von einer Seite dargestellte Bipolarplatte 12, welche an ihrer Oberfläche 13 mit einer porösen Diffusionsschicht 14 in Anlagekontakt steht. Die Diffusionsschicht 14 ist mit einer ersten katalytischen Reaktionsschicht 16 flächenverbunden, welche ihrerseits unter Zwischenschaltung einer Membran 18 mit einer zweiten katalytischen Reaktionsschicht 20 in Wirkverbindung steht. Die Funktionsweise der Brennstoffzelle 10 ist an sich bekannt, so dass lediglich auf die erfindungsrelevanten Zusammenhänge eingegangen wird.

Die Bipolarplatte 12 ist mit in Bezug auf die Oberfläche 13 randoffenen Betriebsmittelführungskanälen 22, 24 (im Folgenden der Einfachheit halber als Kanäle bezeichnet) versehen unter Ausbildung von zwischen beziehungsweise neben den Kanälen 22, 24 sich erstreckenden Stegen 26. Die Kanäle 22, 24 dienen zur Zu- beziehungsweise Abführung von gasförmigen Reaktionsprodukten (Wasser) und von gasförmigen Reaktionsedukten (Wasserstoff und Sauerstoff), während die Stege 26 Elektronen in entsprechender Weise zu- beziehungsweise abführen. Mittels eines gestrichelten Pfeils 28 in Figur 1 ist ein möglicher Stofftransportweg vom Kanal 24 durch die poröse Diffusionsschicht 14 zur ersten katalytischen Reaktionsschicht 16 dargestellt, während ein weiterer gestrichelter Pfeil 30 einen entsprechenden Stofftransportweg vom Kanal 22 durch die Diffusionsschicht 14 zur ersten katalytischen Reaktionsschicht 16 zeigt. Aufgrund des in Bezug auf Pfeil 28 längeren Stofftransportwegs gemäß Pfeil 30 kann es zu einer unerwünschten ungleichmäßigen Verteilung des Stofftransports zu der ersten katalytischen Reaktionsschicht 16 kommen. Dies kann insbesondere dann eintreten, wenn die Kanäle 22, 24 unter einem im wesentlichen gleichen Druckniveau stehen unter Ausbildung eines rein diffusiven Stofftransports in der porösen Diffusionsschicht 14. Zur Erzielung eines zusätzlichen, konvektiven Stofftransports von der Bipolarplatte 12 durch die poröse Diffusionsschicht 14 zur ersten katalytischen Reaktionsschicht 16 unter Ausbildung einer erwünschten gleichmäßigeren Stofftransportverteilung ist vorgesehen, dass bei dem Ausführungsbeispiel gemäß Figur 1 in zwei benachbarten Kanälen 22, 24 eine Druckdifferenz erzeugt wird. Hierdurch erfolgt sowohl ein diffusiver Wärme- und Stofftransport aufgrund des jeweils vorliegenden Temperatur- und Konzentrationsgradienten als auch ein konvektiver Wärme- und Stofftransport in Folge des vorliegenden Druckgradienten zwischen zwei jeweils benachbarten Kanälen 22, 24 der Bipolarplatte 12.

Die Schnittdarstellung der Brennstoffzelle 10 (Halbzelle) zeigt lediglich eine anodische beziehungsweise eine kathodische Seite, wobei die sich dort ergebenden Reaktionsvorgänge einander entsprechen.

Die Bipolarplatte 12 kann unterschiedliche geometrische Ausgestaltungen aufweisen, um deren Aufgabe des Leitens von Gasen (Kanäle 22, 24) und von Elektronen (Stege 26) durch die poröse Diffusionsschicht 14 zur ersten katalytischen Reaktionsschicht 16 zu erfüllen. Bekannt sind Noppenstrukturen und Kanäle in der Bipolarplatte 12. Bei Einsatz von Kanälen können selbige mäanderartig in der Bipolarplatte 12 ausgebildet sein oder auch eine Kanalreihe bilden, die mittels einer Verteiler- und Sammelleiste parallel durchströmbar sind. Dabei ist es auch möglich, Mehrfachmäanderausbildungen der Kanäle vorzusehen, wobei ein sich ergebender Druckabfall zwischen Kanaleintritt und Kanalaustritt des Kanalsystems der Bipolarplatte 12 möglichst gering gehalten werden sollte, was insbesondere bei größeren Bipolarplatten vorteilhaft ist.

Figur 2 zeigt eine schematische Draufsicht auf einen Teil der Oberfläche 13 des Bipolarelements 12 entsprechend einer möglichen Ausführungsform. Die Bipolarplatte 12 weist einen Betriebsmitteleintritt 32 auf, durch welchen gemäß den Pfeilen 36, 38 ein Betriebsmittel (gasförmige Reaktionsprodukte und gasförmige Reaktionsedukte) in einen ersten Betriebsmittelführungskanal 40 (erster Kanal) und in einen zweiten Betriebsmittelführungskanal 42 (zweiter Kanal) eines Kanalsystems an der Oberfläche 13 der Bipolarplatte 12 strömt. Dabei weist der erste Kanal 40 eine erste Schleife 44 auf, an welchen sich ein Abschnitt 46 des ersten Kanals 40 anschließt. Der Abschnitt 46 des ersten Kanals 40 erstreckt sich parallel zu einem unmittelbar nach dem Betriebsmitteleintritt 32 sich anschließenden Abschnitt 43 des zweiten Kanals 42, so dass die Abschnitte 46, 43 der beiden Kanäle 40, 42 zwei benachbarte Kanalabschnitte bilden. Aufgrund der in Bezug auf den zweiten Kanal 42 zusätzlichen ersten Schleife 44 des ersten Kanals 40 (zusätzlich zu durchströmende Strecke) ergibt sich in den beiden benachbarten Kanalabschnitten 46, 43 eine erwünschte Druckdifferenz. In entsprechender Weise liegt auch eine Druckdifferenz zwischen weiteren benachbarten (parallel sich erstreckenden) Kanalabschnitten des ersten Kanals 40 und des zweiten Kanals 42 zwischen dem Betriebsmitteleintritt 32 und einem Betriebsmittelaustritt 34 der Bipolarplatte 12 vor. Unmittelbar vor dem Betriebsmittelaustritt 34 befindet sich ein letzter Abschnitt 50 des ersten Kanals 40, während der zweite Kanal 42 eine zusätzlich zweite Schleife 52 durchläuft, so dass er mit einem Abschnitt 54 mit dem Betriebsmittelaustritt 34 verbunden ist. Die zweite Schleife 52 des zweiten Kanals 42 dient zum Abbau der Druckdifferenz zwischen den jeweils benachbarten (parallelen) Abschnitten des ersten Kanals 40 und des zweiten Kanals 42 unmittelbar vor dem Betriebsmittelaustritt 34. Das Betriebsmittel wird somit gemäß Pfeil 58 vom ersten Kanal 40 und gemäß Pfeil 56 vom zweiten Kanal 42 in den Betriebsmittelaustritt 34 der Bipolarplatte 12 geleitet. Bei der in Figur 2 dargestellten Bipolarplatte 12 handelt es sich um ein Kanalsystem in Form eines Doppelmäanders, wobei aufgrund der Integration der zusätzlichen ersten Schleife 44 und der zusätzlichen zweiten Schleife 52 unmittelbar nach Betriebsmitteleintritt 32 beziehungsweise unmittelbar vor Betriebsmittelaustritt 34 eine neuartige Kanalausführung zur Herstellung einer erwünschten Druckdifferenz zwischen jeweils zwei benachbarten Kanalabschnitten geschaffen worden ist.

Figur 2 zeigt zusätzlich anhand von unterschiedlichen Grautönen (bei dunkelgrau liegt ein größerer Druck vor als bei hellgrau) berechnete Druckverteilungswerte in den Kanälen der erfindungsgemäßen Bipolarplatte 12. Für die Berechnung der Werte gemäß Figur 2 ist auf eine Modellierung der Diffusionsschicht und der elektrochemischen Reaktion verzichtet worden. Das neuartige Flussfeld ist gegenüber den anderen Flussfeldern des Standes der Technik dadurch gekennzeichnet, dass zwischen zwei benachbarten Kanälen eine hinreichend große Druckdifferenz vorliegt, die zur Verbesserung beziehungsweise Ausbildung eines gleichmäßigeren Wärme- und Stofftransports in der Diffusionsschicht der Brennstoffzelle führt. Dies wird dadurch erreicht, dass einer der beiden Kanäle (in Figur 2 der erste Kanal 40) eine Extraschleife 44 ausführt und anschließend beide Kanäle 40, 42 als Doppelmäander über die Bipolarplatte geführt werden und zum Betriebsmittelaustritt hin der andere Kanal (in Figur 2 der zweite Kanal 42) eine entsprechende Extraschleife 52 ausführt, um eine gleichmäßige Durchströmung der Bipolarplatte sicherzustellen. Da sich die Extraschleifen 44, 52 vorteilhafterweise beliebig orientieren lassen, lässt sich dieses Prinzip auch bei Mehrfachmäandern mit einer beliebigen Anzahl von Kanälen anwenden.

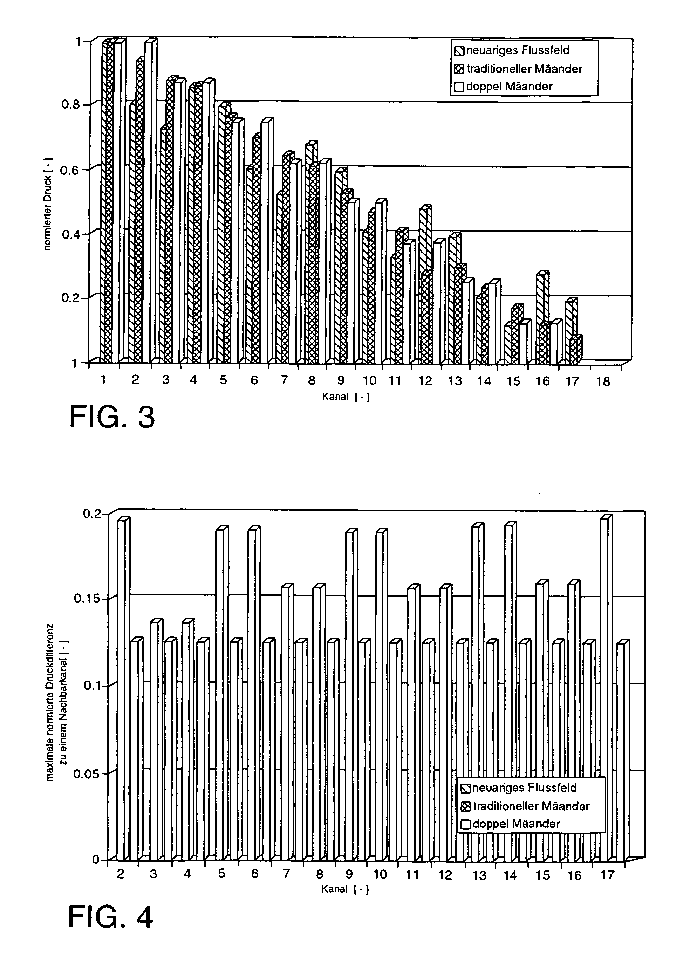

In Figur 3 sind in Form eines Balkendiagramms die normierten Druckverteilungswerte in den jeweiligen Kanälen für ein erfindungsgemäßes, neuartiges Flussfeld entlang einer Schnittlinie 60 der Figur 2, für ein traditionelles Mäander (ohne Extraschleifen) und für ein Doppelmäander (ebenfalls ohne Extraschleife) dargestellt. Die normierten Druckverteilungswerte zwischen 0 und 1 ergeben sich aus der Beziehung

$$p_{norm} = \frac{p - p_{aus}}{p_{ein} - p_{aus}}$$

Aus dem Balkendiagramm der Figur 3 ist zu erkennen, dass bei dem neuartigen Flussfeld zwischen jeweils zwei benachbarten Kanälen eine erwünschte Druckdifferenz vorliegt, die hinreichend groß ist zur Erzielung eines verbesserten, das heißt gleichmäßigeren Wärme- und Stofftransports in der Diffusionsschicht einer Brennstoffzelle. Bei den bekannten Flussfeldern "traditioneller Mäander" und "Doppelmäander" liegt eine derartige Druckdifferenz zwischen zwei benachbarten Kanälen nicht vor.

Figur 4 zeigt ein Balkendiagramm, in welchem die jeweils maximale normierte Druckdifferenz eines jeweiligen Kanals des jeweiligen Flussfelds zu seinen beiden Nachbarkanälen dargestellt ist. Aus Figur 4 wird deutlich, dass beim neuartigen Flussfeld im Vergleich zu den beiden anderen, zum Stand der Technik zählenden Flussfeldern stets eine größere maximale Druckdifferenz vorliegt. Aufgrund dieser größeren Druckdifferenzen ergibt sich ein verbesserter konvektiver Wärme- und Stofftransport in der Diffusionsschicht, so dass letztendlich ein leistungsfähigeres Brennstoffzellensystem erhalten wird. Der gleiche Effekt einer größeren Druckdifferenz zwischen zwei benachbarten Kanälen ergibt sich auch bei anderen Flussfeldern, zum Beispiel, wenn man die Kanäle als Doppelspirale anordnet, wobei auch hier die erwünschte Druckdifferenz zwischen zwei benachbarten Kanälen beziehungsweise Kanalabschnitten erzeugt werden kann.

Dabei ist es alternativ möglich, die Doppelspirale ohne zusätzliche Schleifen auszubilden. Ebenso sind jedoch auch Mehrfachspiralen mit einer Vielzahl von zusätzlichen Schleifen möglich.

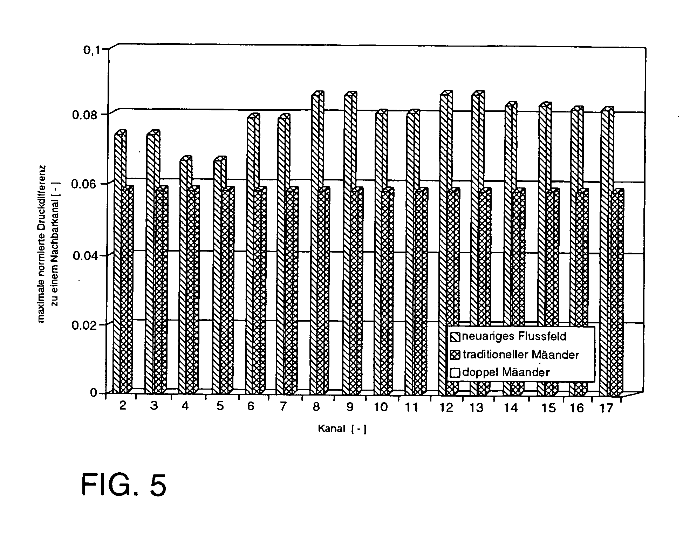

Figur 5 zeigt anhand eines Balkendiagramms die jeweils minimale normierte Druckdifferenz eines Kanals eines jeweiligen Flussfelds zu seinen beiden Nachbarkanälen. Dabei gelten die in Bezug auf die Figur 4 gemachten Ausführungen auch auf die Darstellung der Figur 5.

## Patentansprüche

1. Verfahren zur Verbesserung eines Wärme- und Stofftransports in einer Diffusionsschicht (14) einer Brennstoffzelle (10), wobei die Diffusionsschicht (14) mit einem ein Kanalsystem aufweisenden Bipolarelement (12) in Verbindung steht und das Kanalsystem einen ersten und einen zweiten Betriebsmittelführungskanal (40, 42) aufweist, die sich in Durchströmungsrichtung (36, 38, 56, 58) kontinuierlich von einem Betriebsmitteleintritt (32) zu einem Betriebsmittelaustritt (34) erstrecken, und der erste und zweite Betriebsmittelführungskanal (40, 42) zueinander benachbart verlaufende Kanalabschnitte (43, 46; 48, 50) ausbilden, und wobei der erste Betriebsmittelführungskanal (40) stromabwärts des Betriebsmitteleintritts (32) und stromaufwärts der benachbaren Kanalabschnitte (43, 46; 48, 50) eine zusätzliche Schleife (44) oder Mäander ausführt und der zweite Betriebsmittelführungskanal (42) stromabwärts der benachbarten Kanalabschnitte (43, 46; 48, 50) und stromaufwärts des Betriebsmittelaustritts (34) eine zusätzliche Schleife (52) oder Mäander ausführt, derart dass in mindestens zwei benachbarten Kanalabschnitten (43, 46; 48, 50) eine Druckdifferenz erzeugt wird unter Ausbildung eines konvektiven Wärme- und Stofftransports, **dadurch gekennzeichnet, dass** die zueinander benachbart verlaufenden Kanalabschnitte (43, 46; 48, 50) die Form eines Einfach- oder Mehrfachmäanders oder einer Doppelspirale ausbilden.

2. Verfahren nach Anspruch 1, **dadurch gekennzeichnet, dass** das Betriebsmittel gasförmige Reaktionsprodukte und gasförmige Reaktionsedukte aufweist, die vorzugsweise in reiner Form oder als Anteil eines Gemisches zugeführt werden.

3. Verfahren nach einem der vorhergehenden Ansprüche, **dadurch gekennzeichnet, dass** die in der Diffusionsschicht (14) zu transportierenden Stoffe Reaktionsedukte, insbesondere $H_2$ und $O_2$, Reaktionsprodukte, insbesondere $H_2O$ und Elektronen sind.

4. Verfahren nach einem der vorhergehenden Ansprüche, **dadurch gekennzeichnet, dass** die Stoffe von der Diffusionsschicht (14) zu einer katalytischen Reaktionsschicht (16) transportiert werden.

5. Verfahren nach einem der vorhergehenden Ansprüche, **dadurch gekennzeichnet, dass** das Bipolarelement (12) als eine oberflächenstrukturierte Bipolarplatte ausgebildet ist mit an einer Oberfläche (13) randoffenen Betriebsmittelführungskanälen (22, 24, 40, 42) und zwischengeordneten Stegen (26).

6. Verfahren nach Anspruch 5, **dadurch gekennzeichnet, dass** mittels der Stege (26) ein Transport von Elektronen zur Diffusionsschicht (14) erfolgt.

7. Verfahren nach einem der vorhergehenden Ansprüche, **dadurch gekennzeichnet, dass** die Erzeugung der Druckdifferenz in jeweils zwei benachbarten Betriebsmittelführungskanälen (22, 24) bei gleichzeitigem Druckabfall zwischen einem Betriebsmitteleintritt (32) und einem Betriebsmittelaustritt (34) der Brennstoffzelle (10) erfolgt.

8. Verfahren nach einem der vorhergehenden Ansprüche, **dadurch gekennzeichnet, dass** die Druckdifferenz kontinuierlich über die zueinander benachbart verlaufenden Kanalabschnitte (43, 46; 48, 50) vom Betriebsmitteleintritt (32) bis zum Betriebsmittelaustritt (34) erzeugt wird.

9. Verfahren nach einem der vorhergehenden Ansprüche, **dadurch gekennzeichnet, dass** die zwei zusätzlichen Schleifen (44, 52) oder Mäander insbesondere gleich lang sind und eine einander entsprechende Formgestaltung aufweisen.

10. Bipolarelement (12) für eine Brennstoffzelle (10) mit einem Kanalsystem zur Zu- und Abführung eines Betriebsmittels, wobei das Kanalsystem einen ersten und einen zweiten Betriebsmittelführungskanal (40, 42) aufweist, die sich von einem Betriebsmitteleintritt (32) bis zum Betriebsmittelaustritt (34) kontinuierlich erstrecken, und der erste und zweite Betriebsmittelführungskanal (40, 42) zueinander benachbart verlaufende Kanalabschnitte (43, 46; 48, 50) ausbilden, und wobei der erste Betriebsmittelführungskanal (40) stromabwärts des Betriebsmitteleintritts (32) und stromaufwärts zu den zueinander benachbarten Kanalabschnitten (43, 46; 48, 50) eine zusätzliche Schleife (44) oder Mäander aufweist und der zweite Betriebsmittelführungskanal (42) stromab der zueinander benachbarten Kanalabschnitte (43, 46; 48, 50) und stromauf des Betriebsmittelaustritts (34) eine zusätzliche Schleife (52) oder Mäander aufweist, derart dass zwischen den benachbarten Kanalabschnitten (43, 46; 48, 50) eine Druckdifferenz erzeugt wird unter Ausbildung eines konvektiven Wärme- und Stofftransports **dadurch gekennzeichnet, dass** die zueinander benachbart verlaufenden Kanalabschnitte (43, 46; 48, 50) die Form eines Einfach- oder Mehrfachmäanders oder einer Doppelspirale ausbilden.

11. Bipolarelement (12) nach Anspruch 10, **dadurch gekennzeichnet, dass** die zwei zusätzlichen Schleifen (44, 52) oder Mäander gleich lang sind und eine einander entsprechende Formgestaltung aufweisen.

12. Brennstoffzelle (10) mit zumindest einer Bipolarplatte (12) nach einem der Ansprüche 10 bis 11.

13. Verwendung einer Brennstoffzelle (10) nach Anspruch 12 in einem Kraftfahrzeug.

## Claims

1. Method for improving a heat and mass transfer in a diffusion layer (14) of a fuel cell (10), the diffusion layer (14) being connected to a bipolar element (12) which includes a passage system, and the passage system having a first passage (40) for carrying operating medium and a second passage (42) for carrying operating medium, which extend continuously from an operating-medium inlet (32) to an operating-medium outlet (34) in the direction of flow (36, 38, 56, 58), and the first passage (40) for carrying operating medium and the second passage (42) for carrying operating medium forming passage sections (43, 46; 48, 50) which run adjacent to one another, and the first passage (40) for carrying operating medium executing an additional loop (44) or meander downstream of the operating-medium inlet (32) and upstream of the adjacent passage sections (43, 46; 48, 50), and the second passage (42) for carrying operating medium executing an additional loop (52) or meander downstream of the adjacent passage sections (43, 46; 48, 50) and upstream of the operating-medium outlet (34), in such a manner that a pressure difference is generated in at least two adjacent passage sections (43, 46; 48, 50), so as to form a convective heat and mass transfer, **characterized in that** the passage sections (43, 46; 48, 50) running adjacent to one another take the form of a single or multiple meander or a double helix.

2. Method according to Claim 1, **characterized in that** the operating medium includes gaseous reaction products and gaseous reaction educts, which are preferably supplied in pure form or as part of a mixture.

3. Method according to one of the preceding claims, **characterized in that** the substances to undergo mass transfer in the diffusion layer (14) are reaction educts, in particular $H_2$ and $O_2$, and reaction products, in particular $H_2O$ and electrons.

4. Method according to one of the preceding claims, **characterized in that** the substances are transferred from the diffusion layer (14) to a catalytic reaction layer (16).

5. Method according to one of the preceding claims, **characterized in that** the bipolar element (12) is designed as a surface-structured bipolar plate with passages (22, 24, 40, 42) for carrying operating medium, which are open at the edges of one surface (13), and webs (26) arranged between them.

6. Method according to Claim 5, **characterized in that** electrons are transferred to the diffusion layer (14) by means of the webs (26).

7. Method according to one of the preceding claims, **characterized in that** the generation of the pressure difference takes place in each case in two adjacent passages (22, 24) for carrying operating medium with, at the same time, a pressure drop between an operating-medium inlet (32) and an operating-medium outlet (34) of the fuel cell (10).

8. Method according to one of the preceding claims, **characterized in that** the pressure difference is continuously generated via the passage sections (43, 46; 48, 50) running adjacent to each other from the operating-medium inlet (32) to the operating-medium outlet (34).

9. Method according to one of the preceding claims, **characterized in that** the two additional loops (44, 52) or meanders in particular are of the same length and have a matching shape.

10. Bipolar element (12) for a fuel cell (10) having a passage system for supplying and removing an operating medium, the passage system having a first passage (40) for carrying operating medium and a second passage (42) for carrying operating medium, which extend continuously from an operating-medium inlet (32) to the operating-medium outlet (34), and the first passage (40) for carrying operating medium and the second passage (42) for carrying operating medium forming passage sections (43, 46; 48, 50) which run adjacent to one another, and the first passage (40) for carrying operating medium having an additional loop (44) or meander downstream of the operating-medium inlet (32) and upstream of the passage sections (43, 46; 48, 50) that are adjacent to one another, and the second passage (42) for carrying operating medium having an additional loop (52) or meander downstream of the passage sections (43, 46; 48, 50) that are adjacent to one another and upstream of the operating-medium outlet (34), in such a manner that a pressure difference is generated between the adjacent passage sections (43, 46; 48, 50), so as to form a convective heat and mass transfer, **characterized in that** the passage sections (43, 46; 48, 50) running adjacent to one another take the form of a single or multiple meander or a double helix.

11. Bipolar element (12) according to Claim 10, **characterized in that** the two additional loops (44, 52) or meanders are of the same length and have a matching shape.

12. Fuel cell (10) having at least one bipolar plate (12) according to one of Claims 10 to 11.

13. Use of a fuel cell (10) according to Claim 12 in a motor vehicle.

**Revendications**

1. Procédé d'amélioration du transport de chaleur et de matière dans une couche de diffusion (14) d'une cellule à combustible (10),
la couche de diffusion (14) communiquant avec un élément bipolaire (12) qui présente un système de canaux,
le système de canaux présentant un premier et un deuxième canal (40, 42) de transport d'agent de fonctionnement qui s'étendent de manière continue depuis une entrée (32) d'agent de fonctionnement jusqu'à une sortie (34) d'agent de fonctionnement dans une direction d'écoulement (36, 38, 56, 58), le premier et le deuxième canal (40, 42) de transport d'agent de fonctionnement formant des parties de canal (43, 46; 48, 50) qui s'étendent au voisinage l'une de l'autre, le premier canal (40) de transport d'agent de fonctionnement exécutant une boucle (44) ou un méandre supplémentaire en aval de l'entrée (32) d'agent de fonctionnement et en amont des parties voisines de canal (43, 46; 48, 50) et le deuxième canal (42) de transport d'agent de fonctionnement formant une boucle (52) ou un méandre supplémentaire en aval des parties voisines de canal (43, 46; 48, 50) et en amont de la sortie (34) d'agent de fonctionnement, de telle sorte qu'une différence de pression soit formée dans au moins deux parties voisines de canal (43, 46; 48, 50) et entraîne un transport de chaleur et de matière par convection, **caractérisé en ce que** les parties de canal (43, 46; 48, 50) qui s'étendent au voisinage l'une de l'autre ont la forme d'un méandre simple ou multiple ou d'une double spirale.

2. Procédé selon la revendication 1, **caractérisé en ce que** l'agent de fonctionnement présente des produits gazeux de réaction et des réactifs gazeux qui sont amenés de préférence sous forme pure ou comme partie d'un mélange.

3. Procédé selon l'une des revendications précédentes, **caractérisé en ce que** les substances à transporter dans la couche de diffusion (14) sont des réactifs, en particulier $H_2$ et $O_2$, et des produits de réaction, en particulier $H_2O$ et des électrons.

4. Procédé selon l'une des revendications précédentes, **caractérisé en ce** les substances sont transportées par la couche de diffusion (14) vers une couche (16) de réaction catalytique.

5. Procédé selon l'une des revendications précédentes, **caractérisé en ce que** l'élément bipolaire (12) est configuré comme plaque bipolaire à surface structurée qui présente sur une surface (13) des canaux (22, 24, 40, 42) de transport d'agent de fonctionnement à bordure ouverte entre lesquels sont disposées des nervures (26).

6. Procédé selon la revendication 5, **caractérisé en ce que** les nervures (26) permettent un transport d'électrons vers la couche de diffusion (14).

7. Procédé selon l'une des revendications précédentes, **caractérisé en ce que** la formation de la différence de pression dans deux canaux voisins (22, 24) de transport d'agent de fonctionnement s'effectue en même temps qu'une diminution de pression entre une entrée (32) d'agent de fonctionnement et une sortie (34) d'agent de fonctionnement de la cellule à combustible (10).

8. Procédé selon l'une des revendications précédentes, **caractérisé en ce que** la différence de pression est formée en continu sur les parties de canal (43, 46; 48, 50) qui s'étendent au voisinage l'une de l'autre entre l'entrée (32) d'agent de fonctionnement et la sortie (34) d'agent de fonctionnement.

9. Procédé selon l'une des revendications précédentes, **caractérisé en ce que** les deux boucles (44, 52) ou méandres supplémentaires sont en particulier de même longueur et présentent des configurations qui se correspondent l'une à l'autre.

10. Elément bipolaire (12) pour cellule à combustible (10) doté d'un système de canaux destinés à amener et évacuer un agent de fonctionnement, le système de canaux présentant un premier et un deuxième canal (40, 42) de transport d'agent de fonctionnement qui s'étendent de manière continue depuis une entrée (32) d'agent de fonctionnement jusqu'à une sortie (34) d'agent de fonctionnement, le premier et le deuxième canal (40, 42) de transport d'agent de fonctionnement formant des parties de canal (43, 46; 48, 50) qui s'étendent au voisinage l'une de l'autre, le premier canal (40) de transport d'agent de fonctionnement exécutant une boucle (44) ou un méandre supplémentaire en aval de l'entrée (32) d'agent de fonctionnement et en amont des parties voisines de canal (43, 46; 48, 50) et le deuxième canal (42) de transport d'agent de fonctionnement formant une boucle (52) ou un méandre supplémentaire en aval des parties voisines de canal (43, 46; 48, 50) et en amont de la sortie (34) d'agent de fonctionnement, de telle sorte qu'une différence de pression soit formée dans au moins deux parties voisines de canal (43, 46; 48, 50) et entraîne un transport de chaleur et de matière par convection, **caractérisé en ce que** les parties de canal (43, 46; 48, 50) qui s'étendent au voisinage l'une de l'autre ont la forme d'un méandre simple ou multiple ou d'une double spirale.

11. Elément bipolaire (12) selon la revendication 10, **caractérisé en ce que** les deux boucles (44, 52) ou méandres supplémentaires sont de même longueur et présentent des configurations qui se correspondent l'une à l'autre.

12. Cellule à combustible (10) qui présente au moins une plaque bipolaire (12) selon l'une des revendications 10 à 11.

**13.** Utilisation d'une cellule à combustible (10) selon la revendication 12 dans un véhicule automobile.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0017952 A1
- DE 10008022 A1